(19) Europäisches Patentamt
European Patent Office
Office européen des brevets

(11) **EP 0 546 367 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.$^6$: **B29C 59/14**
// B29K23:00

(21) Anmeldenummer: **92119883.4**

(22) Anmeldetag: **23.11.1992**

(54) **Verfahren zur Plasmabehandlung einer Werkstückoberfläche, Vakuumbehandlungsanlage zu dessen Ausführung und Verwendung des Verfahrens bzw. der Anlage und lackierter, vorgängig plasmabehandelter Kunststoffteil**

Method for the plasma treatment of a surface of a workpiece, vacuum treatment installation for carrying out same and use of the method or installation and lacquered, previously plasma treated plastic article.

Procédé pour le traitement par plasme d'une surface d'un objet, installation de traitement à orde pour sa mise en oeuvre et utilisation du procédé ou de l'installation et objet plastique laqué ayant été traité ou préalable par un plasme.

(84) Benannte Vertragsstaaten:
**CH DE ES FR GB IT LI**

(30) Priorität: **23.12.1991 CH 3837/91**

(43) Veröffentlichungstag der Anmeldung:
**16.06.1993 Patentblatt 1993/24**

(73) Patentinhaber: **BALZERS AKTIENGESELLSCHAFT**
**FL-9496 Balzers (LI)**

(72) Erfinder: **Jost, Stephan**
**CH-9477 Trübbach (CH)**

(74) Vertreter: **Troesch Scheidegger Werner AG**
**Patentanwälte,**
**Siewerdtstrasse 95,**
**Postfach**
**8050 Zürich (CH)**

(56) Entgegenhaltungen:
**EP-A- 0 120 307**      **EP-A- 0 129 199**
**GB-A- 2 105 729**

- **MODERN PLASTICS INTERNATIONAL, Band 20, Nr. 10, Oktober 1990, Seiten 74-79, Lausanne, CH; P. MAPLESTON: "Plasma technology progess improve options in surface treatment"**

## Beschreibung

Die vorliegende Erfindung betrifft ein Verfahren zur Plasmabehandlung einer Werkstückoberfläche in einer Reaktivgasatmosphäre nach dem Oberbegriff von Anspruch 1 sowie eine Vakuumbehandlungsanlage zu dessen Ausführung nach dem Oberbegriff von Anspruch 13 sowie eine Verwendung des Verfahrens bzw. der Anlage nach Anspruch 21 und, nach Anspruch 23, einen lackierten, vorgängig plasmabehandelten Kunststoffteil.

Bezüglich der Oberflächenbehandlung von Werkstücken existiert ein ausgedehntes Schrifttum. Es wird verwiesen auf:

- EP-A-349 749, 0 120 307, 0 129 199, 0 152 511, auf die

- US-A-4 072 769, 4 338 420, 4 445 991, 4 297 187, 4 465 715, 4 584 965, 4 678 644, 4 576 692, 4 595 570, 4 874 453, 4 919 745, auf die

- japanischen Kokai Nr. 5 385 782, weiter auf die

- DE-A-3 822 482, 3 605 492, 3 408 837, 3 125 786, 3 638 719, 3 463 001, 1 105 149, 3 836 948 und auf folgende Artikel

- Hall JR, Journal of Applied Polymer Science, vol. 13, p. 2085 (1969), "Bondability of PP, PE by oxygen plasma treatments",

- M. Hudis in Hollahan & Bell, "Techniques and Applications of Plasma Chemistry", Wiley 1974,

- Matell et al., Ind.Eng.Chem.Prod.Rev. Vol. 3, (64), p. 300, "Low temperature oxide plasma ...",

- Schonhorn et al., J.Polymer Science B, 4 203 (1966), "A new technique for preparing low surface energy polymers for adhesive bonding",

Es sind demnach die verschiedensten Plasmabehandlungsverfahren von Kunststoffoberflächen zur Verbesserung der Benetzbarkeit, der Beklebbarkeit und Lackhaftung bekannt, bei welchen verschiedenartig erzeugte Plasmen, wie beispielsweise gepulste Plasmen gemäss der GB-A-2 105 729, Mikrowellenplasmen gemäss der US-A-4 595 570, eingesetzt werden und beispielsweise, als reaktive Gase, wie aus der US-A-4 445 991 bekannt, N2-, O2-Gasgemische.

Aus der nächstkommenden Zeitschrift "Modern Plastics International", Bd. 20, Nr. 10, Oktober 1990, Lausanne-CH, S. 74-79; Peter Mapleston: "Plasma technology progress improve options in surface treatment", ist es bekannt, dass das Diagramm "Haftung/Behandlungsdauer" von plasmabehandelten Werkstückoberflächen aus Kunststoff eine Maximalstelle aufweist.

Insbesondere für die Behandlung grosser Substrate mit Ausdehnungen der zu behandelnden Oberfläche $\geq$ 1m ist es Ziel der vorliegenden Erfindung, ein Verfahren und eine Anlage zu dessen Ausführung vorzuschlagen, wodurch mindestens die Lackhaftung auf der behandelten Oberfläche anders erhöht wird, um nicht an optimale Behandlungszeiten gebunden zu sein.

Zu diesem Zweck zeichnet sich das Verfahren eingangs genannter Art nach dem kennzeichnenden Teil von Anspruch 1 aus.

Es wurde erkannt, dass die Lackhaftung an plasmaoberflächenbehandelten, organischen Polymeren bzw. an Oberflächen, die im wesentlichen aus mindestens einem organischen Polymer bestehen, in Funktion des Reaktivgasdruckes ein ausgesprochenes Maximum aufweist.

Bevorzugterweise wird, gemäss Anspruch 2, die Behandlung, sowohl was Druck anbelangt, wie auch was Behandlungszeit anbelangt, optimiert.

Dem Wortlaut von Anspruch 3 folgend, wird dabei vorgeschlagen, insbesondere für die Behandlung von Oberflächen aus auf Polypropylen basierendem Kunststoff, jedoch auch für die Behandlung von Oberflächen, welche im wesentlichen aus anderen Polymeren bestehen, die Behandlungsdauer T in den angegebenen Bereichen zu wählen, wobei insbesondere die Behandlung während einer Zeit von ca. 60s, wie gefunden wurde, derjenigen im wesentlichen auf dem Maximum im Lackhaftungs-/Behandlungsdauer-Diagramm entspricht. Da das Maximum relativ flach ist, ist die exakte Einhaltung der Optimalbehandlungsdauer nicht kritisch.

Da mit Bezug auf das Maximum im Haftungs-/Behandlungsdauer-Diagramm aus genanntem Grund bereits in der Nähe des Maximums unerwartet gute Lackhaftungen erreicht werden, wird vorgeschlagen, nach dem Wortlaut von Anspruch 4, die Behandlungsdauer in den dort angegebenen Bereichen, bezogen auf die Behandlungsdauer für Maximal-Lackhaftung, vorzunehmen.

Dies, falls es, beispielsweise aus Gründen des anderweitig gegebenen Beschickungstaktes an einer Behandlungsanlage erwünscht ist, nicht genau auf der eine maximale Lackhaftung ergebenden Behandlungsdauer zu fahren, um den erwähnten Takt einzuhalten.

Im weiteren wird vorgeschlagen, wiederum insbesondere für die Behandlung von Oberflächen aus auf Polypropylen basierendem Kunststoff, jedoch auch für die Behandlung von Oberflächen, welche im wesentlichen aus anderen Polymeren bestehen, den Behandlungsdruck p in den in den Ansprüchen 5 bzw. 6 angegebenen Bereichen zu wählen.

Auch die Maxima der Lackhaftung bezüglich Reaktivgasdruck sind relativ flach, so dass auch hier die Einhaltung eines exakten Druckwertes, entsprechend dem optimalen Wert $p_0$, unkritisch ist.

Anderseits sind die angegebenen Druckbereiche wesentlich tiefer, als dies üblicherweise für die Plasmaoberflächenbehandlung von Kunststoffteilen gewählt wird, und da die Behandlungshomogenität in einem Behandlungsraum in Grenzen mit abnehmendem Reaktivgasdruck zunimmt, wird erfindungsgemäss, nebst dem erkannten Maximum, noch gleichzeitig eine erhöhte Behandlungshomogenität im Behandlungsraum erzielt, mit der Möglichkeit, letzteren mit grösseren Werkstücken bzw. mit mehr Werkstücken optimaler zu nutzen.

Selbstverständlich werden, wie erwähnt wurde, sowohl das Lackhaftungs-/Behandlungsdauer-Maximum wie auch das bei relativ tiefen Drucken erkannte Lackhaftungs-/Raktivgasdruck-Maximum ausgenützt.

Das genannte Verfahren lässt sich ausserordentlich flexibel in verschiedenartigst ausgelegten und betriebenen Vakuumbehandlungsanlagen realisieren, indem, gemäss dem Wortlaut von Anspruch 7, ein weitest möglicher Bereich von Möglichkeiten für die elektrische Anregung des Behandlungsplasmas sich, allerdings in unterschiedlichem Masse, für die erwähnte Behandlung eignet.

Insbesondere wurde dabei gefunden, dass bevorzugterweise die Plasmaanregung mit 50 bis 200Hz erfolgen kann, als Grundharmonische im Frequenzspektrum, was insofern zu wesentlichen Vereinfachungen des Plasmaanregungs-Generators führt, dass gemäss Anspruch 8 netzfrequente Signale ein- oder zweiweggleichgerichtet zur Plasmaanregung eingesetzt werden können. Dabei ist im heutigen Zeitpunkt noch nicht restlos abgeklärt, inwiefern die höheren Harmonischen derartiger ein- oder zweiweg-gleichgerichteter Anregungssignale Einfluss auf den erfindungsgemässen Prozess nehmen.

Im weiteren wird das erfindungsgemässe Vorgehen in bevorzugter Art und Weise nach den Wortlaut der Ansprüche 9 und insbesondere 10 durchgeführt.

Eine Verwendung von Stickstoff-/Sauerstoff-Reaktivgasgemisch und insbesondere von Luft, wie von Umgebungsluft, ergibt, wiederum im Sinne der Aufwandsoptimierung, einen höchst kostengünstigen Behandlungsprozess.

Bevorzugte Entladungsspannungswerte sind im weiteren im Anspruch 11 spezifiziert.

Im weiteren wurde gefunden, dass, insbesondere für die erfindungsgemässe Behandlung grosser Oberflächen, sich die Anordnung der Werkstückoberfläche, gemäss Wortlaut von Anspruch 12, auf die Behandlungshomogenität entlang der genannten Oberfläche äusserst günstig auswirkt.

Eine Anlage insbesondere zur Ausführung des erfindungsgemässen Verfahrens zeichnet sich im weiteren nach dem kennzeichnenden Teil von Anspruch 13 aus.

Dadurch, dass die Elektrodenanordnung mindestens zwei im Bereiche der Rezipientenwandung angeordnete Stabelektroden umfasst und die Gaseinlassanordnung mindestens eine zwischen Rezipientenwandung und mindestens eine der Stabelektroden gaseindüsende, stabförmige Gasbrause, wird erreicht, dass der zur Verfügung stehende Innenraum des Vakuumrezipienten für die Behandlung optimal genutzt werden kann, was sich insbesondere bei der erfindungsgemässen Behandlung ausgedehnter Oberflächen, d.h. von Oberflächen mit Ausdehnungen in einer Richtung $\geq$ 1m, ausserordentlich günstig auf die Anlagekosten auswirkt.

Die mit durch die erwähnte Elektrodenanordnung und Reaktivgaseindüsung erwirkte Homogenität bzw. Gleichförmigkeit der Behandlungswirkung wird bei Auslegung der erfindungsgemässen Anlage nach dem Wortlaut von Anspruch 14 noch erhöht.

Die Vorteile der Ausbildung der erfindungsgemässen Anlage gemäss den Ansprüchen 15 und 16 wurden bereits im Zusammenhang mit entsprechenden Verfahrensmassnahmen diskutiert.

Durch Vorsehen von Stabelektroden nach dem Wortlaut von Anspruch 17 wird im weiteren der zur Verfügung stehende Rezipientenraum insofern optimal genutzt, als dass sich im wesentlichen im gesamten Rezipientenraum die Plasmaentladung einstellt, womit, bei gegebenem Rezipientenraum, die Möglichkeit geschaffen ist, möglichst grosse Oberflächen erfindungsgemäss und optimal gleichmässig zu behandeln.

Um im weiteren die im Zusammenhang mit dem erfindungsgemässen Verfahren abgehandelten gefundenen und der Erfindung zugrundegelegten Maxima optimal auszunützen bzw. den Behandlungsprozess diesbezüglich auf einem erwünschten, vorgegebenen Druck zu fahren, wird vorgeschlagen, die Anlage nach dem Wortlaut von Anspruch 18 auszubilden.

Im weiteren wird die Anlage bevorzugterweise nach dem Wortlaut von Anspruch 19 ausgebildet, indem der Entladungsraum eine Ausdehnung von mindestens 1m aufweist, womit die Möglichkeit geschaffen wird, grosse Oberflächen an entsprechend grossen Werkstücken erfindungsgemäss zu behandeln.

Die erfindungsgemässe Anlage wird insbesondere auch wegen ihrer Ausbildung nach dem Wortlaut von Anspruch 20 konstruktiv einfach, indem die Oberflächen-zu-behandelnden Werkstücke darin stationär behandelt werden.

Bevorzugte Verwendungen des erfindungsgemässen Verfahrens bzw. der erfindungsgemässen Anlage sind in den Ansprüchen 21 und 22 spezifiziert.

Im weiteren spezifiziert Anspruch 23 einen lackierten, vorgängig plasmabehandelten Kunststoffteil, woran die Mindestausdehnung einer lackierten Fläche $\geq$ 1m ist und woran erfindungsgemäss die Lackabzugkraft $\geq$ 1,8N/mm Lackstreifenbreite beträgt, vorzugsweise $\geq$ 2,0N/mm beträgt.

Die Erfindung wird anschliessend beispielsweise anhand von Figuren erläutert.

Es zeigen:

Fig. 1   schematisch eine Aufsicht auf eine erfindungsgemässe Vakuumbehandlungsanlage,

Fig. 2   ein Lackhaftungs-/Behandlungsdauer-Diagramm mit erfindungsgemäss ausgenützten Behandlungsdauerbereichen,

Fig. 3     ein Lackhaftungs-/Behandlungsdruck-Diagramm mit erfindungsgemäss ausgenützten Prozessdruckbereichen und

Fig. 4     qualitativ, eine dreidimensionale Darstellung der Lackhaftung in Funktion von Behandlungsdauer und Behandlungsdruck, entsprechend dem als Basis zur vorliegenden Erfindung erkannten prinzipiellen Funktionsflächenverlauf.

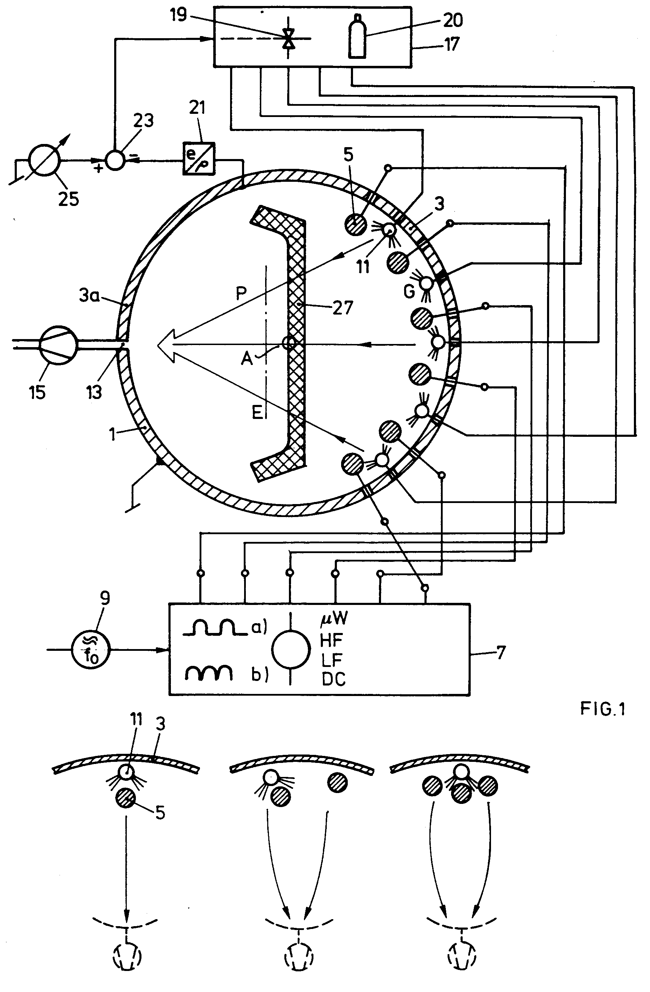

In Fig. 1 ist schematisch und vereinfacht ein Beispiel einer erfindungsgemässen Behandlungsanlage im Querschnitt dargestellt. Sie umfasst einen Vakuumrezipienten 1. Im Bereich der Rezipientenwandung 3 sind ein oder mehrere, wie dargestellt, beispielsweise sechs Stabelektroden 5 angeordnet. Diese sind bei der Anlage nach Fig. 1 im wesentlichen parallel zur Wandung 3 montiert, im wesentlichen zueinander parallel. Als Gegenelektrode zu den Stabelektroden 5 wirkt mindestens ein Innenbereich des Vakuumrezipienten, bevorzugterweise und wie dargestellt ist, die Innenwand des Vakuumrezipienten 1.

Die Stabelektroden 5 sind auf eine Anregungsgeneratoreinheit 7 geführt, worin ein oder mehrere Generatoren vorgesehen sind, die ein elektrisches Plasmaanregungssignal abgeben, im Frequenzbereich zwischen DC und Hochfrequenz. Bei Einsatz von Mikrowellenenergie werden die Stabelektroden durch Einkopplungselemente ersetzt.

Die mehreren Stabelektroden 5 können alle gemeinsam von einem Generator an der Einheit 7 betrieben werden, oder sie können in gleichen oder unterschiedlichen Gruppen mittels zugeordneter Generatoren betrieben sein. Die Generatoreinheit 7 ist, wie bei 9 dargestellt, netzbetrieben. In einer bevorzugten Ausführungsvariante der Generatoreinheit 7 liefert sie zur Speisung der Stabelektroden 5 ein- oder zweiweggleichgerichtete Signale a oder b, ausgehend von der Frequenz $f_0$ des die Einheit 7 speisenden Netzes 9.

Im selben Bereich der Rezipientenwandung 3, in dem die mindestens eine Stabelektrode 5 angeordnet ist, gemäss Fig. 1 die sechs Stabelektroden, sind stabförmige Reaktivgasauslassbrausen 11 vorgesehen. Vorteilhafterweise sind sie, wie dargestellt, bezüglich der erwähnten Wandungspartie 3 des Rezipienten, weniger beabstandet als die vorgesehenen Stabelektroden 5.

An der Anlage gemäss Fig. 1 sind die stabförmigen Reaktivgasbrausen zwischen jeweils zwei Stabelektroden angeordnet, wobei, Fig. 1 unten, andere mögliche Relativanordnungen von Rezipientenwandung 3, Stabelektroden 5 und Reaktivgasbrausen 11 dargestellt sind.

An einer der Anordnung von Stabelektroden 5 und Gasbrausen 11 entgegengesetzten Wandungspartie 3a des Rezipienten 1 ist ein Pumpenanschluss 13 vorgesehen mit Evakuierungspumpe 15. Damit wird für das an den Brausen 11 eingedüste Reaktivgas G ein im wesentlichen linearer, sich quer durch den Rezipienten erstreckender Strömungspfad P realisiert, welcher zusammen mit der bevorzugten, grossflächigen Elektrodenstab-/Brausenanordnung eine homogene Verteilung des zwischen den Elektrodenstäben 5 und der Gegenelektrode 1 erzeugten Plasmas und des darin reagierenden Reaktivgases gewährleistet. Im wesentlichen entlang Ebenen E, wie strichpunktiert eingetragen, ergeben sich im wesentlichen gleiche Verhältnisse zwischen den an der Behandlung beteiligten Gasen.

Die Reaktivgasbrausen 11 sind einer Reaktivgasspeisung 17 zugeführt, worin nebst Steuerventilen 19 ein oder mehrere Gasvorräte 20 vorgesehen sind. Mit Hilfe der Ventile wird das Reaktivgasgemisch, welches über die Brausen 11 in den Rezipienten 1 ausgedüst wird, eingestellt.

Das verwendete Reaktivgasgemisch ist in einer bevorzugten Ausführungsvariante ein Stickstoff-/Sauerstoffgemisch, bevorzugterweise mit einem Mischungsverhältnis von 7:3. Hierzu wird bevorzugterweise Luft als Reaktivgasgemisch verwendet, und es bildet dann der Reaktivgasvorrat 20 an der Einheit 17 einen Luftvorrat, vorzugsweise bestehend aus der Umgebungsluft. Wie für den Betrieb der Anlage nach dem noch zu beschreibenden, erfindungsgemässen Verfahren bevorzugt, ist ein Reaktivgasdruckaufnehmer in Form eines Wandlers 21 vorgesehen, der z.B. durch eine Heisskathoden-Ionisationsröhre bekannter Bauart gebildet wird. Zur Regelung des Reaktivgasdruckes, gegebenenfalls auch des Reaktivgasgemisches, wirkt ein solcher Wandler 21 als IST-Wert-Aufnehmer in einem Regelkreis, mit Differenzeinheit 23, einstellbarer SOLL-Wert-Vorgabeeinheit 25 und Ventilen an der Reaktivgasspeiseeinheit 17 als Stellgliedern.

Oberflächen-zu-behandelnde Werkstücke 27 sind im Rezipienten 1 gehaltert.

Insbesondere für Werkstückoberflächen im wesentlichen aus Polyolefinen, insbesondere im wesentlichen aus auf Polypropylen oder Polyethylen basierenden Kunststoffmischungen, hat sich, im Zusammenhang mit dem erfindungsgemässen, noch zu beschreibenden Verfahren, der Einsatz der dargestellten Anlage ausgezeichnet bewährt.

Erfindungsgemäss können, im Unterschied zu bis anhin bekannten, ähnlichen Oberflächenbehandlungsverfahren in reaktiven Plasmen, ausserordentlich grosse Oberflächen homogen behandelt werden, nämlich Oberflächen, welche mindestens in einer Ausdehnungsrichtung grösser oder gleich 1m sind. Damit eignet sich die dargestellte Anlage, betrieben nach dem noch zu beschreibenden erfindungsgemässen Verfahren, ausgezeichnet für die Oberflächenbehandlung von Kunststoffautoteilen, wie beispielsweise und insbesondere von Kunststoffkarosserieteilen, so z.B. von Kunststoffstossstangen. Dies auch aufgrund der erzielten ausgezeichneten Lackhaftung bei nachmaligem Lackieren, was insbesondere bei letzterwähnten Bauteilen von grosser Wichtigkeit ist.

Die Werkstücke 27 werden dabei vorzugsweise in Richtung A in der in Fig. 1 dargestellten Rezipientenkammer in einer Reihe angeordnet, und entsprechend lange werden Stabelektroden und die stabförmigen Reaktivgasbrausen 11 ausgelegt und vorzugsweise so geformt, dass sie genähert von den zu behandelnden Oberflächen gleich beabstandet sind, wobei dieser Abstand in grossem Bereich unkritisch ist bezüglich Behandlungswirkung.

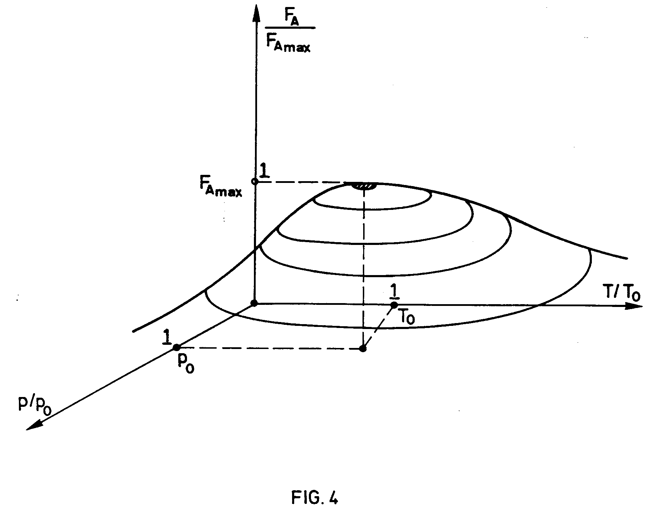

In Fig. 4 ist das als Grundlage zur vorliegenden Erfindung erkannte Verhalten der Lackhaftung in Funktion von Reaktivgasbehandlungsdruck p im Vakuumrezipienten und Behandlungsdauer T dargestellt. Die Lackhaftung wird dabei definiert als die Abzugkraft pro mm eines auf die Oberfläche aufgebrachten Lackstreifens, abgezogen mit konstanter Geschwindigkeit und senkrecht zur erwähnten Oberfläche gemessen. Das Verfahren zur Messung der Lackhaftung ist beispielsweise beschrieben in L. Palmquist, Deutsche Forschungsgemeinschaft für Oberflächenbehandlung, "Neue Entwicklungen bei der Lackierung von Kunststoffen", Vorträge 20. bis 21. März 1990, S. 195.

Gemäss Fig. 4 weist die Lackhaftung, angegeben durch die Abzugkraft $F_a$ pro mm Lackstreifenbreite in Funktion von Reaktivgasdruck p und Behandlungszeitdauer T der vorangehenden erfindungsgemässen Oberflächenbehandlung, ein ausgesprochenes Maximum max auf, das aber relativ flach ist.

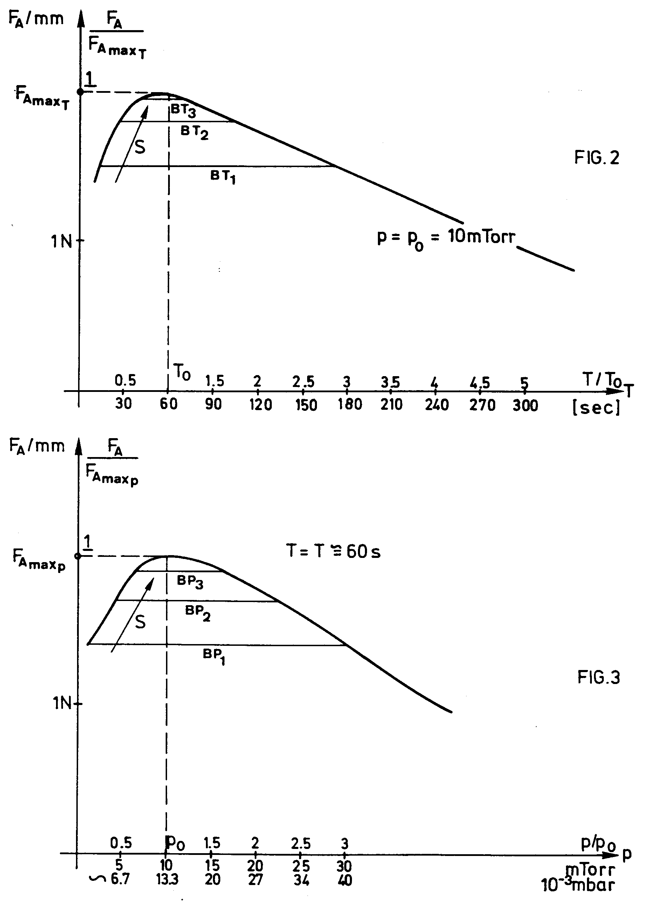

In Fig. 2 ist die wie erwähnt definierte Lackhaftung $F_A$/mm bzw. die auf die Maximalhaftung normierte Haftung

$$\frac{F_A}{F_{AmaxT}}$$

in Funktion der absoluten Behandlungszeitdauer T bzw. der auf die optimale Behandlungszeitdauer $T_0$ normierten dargestellt. Es ist ersichtlich, dass sich in diesem Lackhaftungs-/Behandlungsdauer-Diagramm ein ausgesprochenes, aber relativ flaches Maximum bei $F_{AmaxT}$ ergibt. Der dargestellte beispielsweise Verlauf wurde an Stossstangen mit Polypropylenoberflächen gemessen, mit einem Polyurethanlack nach der erfindungsgemässen Behandlung lackiert. Bei diesen Bedingungen ergibt sich die maximale Lackhaftung bei einer Behandlungsdauer von ca. 60s, und es resultiert eine Lackhaftung entsprechend der Abzugkraft von ca. 2N/mm Streifenbreite.

Während für andere Oberflächenmaterialien der genannten Art und/oder andere Lacke sich, absolut betrachtet, andere Abzugkraft- bzw. Behandlungsdauerwerte einstellen können, bleibt auch dort der grundsätzlich dargestellte Verlauf der Kennlinie erhalten.

Der Reaktivgasdruck bei der Aufnahme gemäss Fig. 2 beträgt 10mTorr entsprechend 13.3 · 10⁻³mbar. Auch bei Aenderung des Reaktivgasdruckes bleibt der in Fig. 2 in Funktion der Behandlungszeitdauer T dargestellte Haftungsverlauf mit ausgesprochenem Maximum grundsätzlich erhalten.

In Fig. 3 ist in Analogie zu Fig. 2 die Funktion der absoluten $F_A$ bzw. normierten $F_A/F_{Amax\,p}$ Lackhaftung dargestellt, in Funktion zum Reaktivgasdruck p, angegeben in mTorr bzw. 10⁻³mbar einerseits, normiert auf den Druck $p_0$ anderseits, der an der auch in diesem Diagramm deutlich erkennbaren, relativ flachen Haftungsmaximalstelle vorherrscht. Das Diagramm gemäss Fig. 3 wurde bei einer Behandlungszeitdauer T von ca. 60s aufgenommen, bei, wie im Zusammenhang mit Fig. 2 erläutert, gewählter Oberfläche und Lackierung, wobei auch der in Fig. 3 dargestellte Verlauf sich grundsätzlich bei Aenderung der Behandlungszeitdauer bzw. der behandelten Oberfläche bzw. des Lackes höchstens quantitativ ändert.

Durch Betreiben des erfindungsgemässen Verfahrens, insbesondere an der Anlage gemäss Fig. 1, kombiniert in der Nähe der optimalen Behandlungszeitdauer $T_0$ und des optimalen Reaktivgasdruckes $p_0$, wurden Lackhaftungen an Werkstückoberflächen mit Ausdehnungen über 1m erzielt, die ≧ 1,8N/mm, bevorzugterweise gar ≧ 2,0N/mm waren.

Dank der Tatsache, dass die Maxima relativ flach sind, sind die Behandlungsdauer- und/oder -Druckeinstellungen vorteilhaft unkritisch.

Die Oberflächenbehandlungen, welche zu den Verläufen gemäss Fig. 2 bzw. 3 führten, wurden mit Luft als Reaktivgas vorgenommen. Die Plasmaentladung wurde weiter mit zweiweg-gleichgerichteter 50Hz-Spannung vorgenommen, mit Spannungseffektivwerten zwischen 1 und 6kV, vorzugsweise zwischen 2 bis 5kV. Der Strom pro 1,2m langem Elektrodenstab war ca. 0.8A.

Es wurden mit dem erfindungsgemässen Verfahren an der erfindungsgemässen Anlage Kunststoffteile oberflächenbehandelt bei Mindestausdehnungen der Oberflächen ≧ 1m in einer Richtung, derart, dass nach ihrer Lackierung Lackhaftungen ≧ 1,8N/mm, ja sogar ≧ 2,0N/mm resultierten. Derartig grosse, lackierte, vorgängig plasmabehandelte Kunststoffoberflächen mit homogen verteilter Lackhaftung in den angegebenen Bereichen waren bis anhin nicht bekannt.

In den Fig. 2 und 3 sind, eingetragen mit $BT_x$ bzw. $BP_x$, die bevorzugten Bereiche für Behandlungszeitdauer T bzw. für den Reaktivgasdruck p absolut bzw. normiert eingetragen, welche je nach übrigen Umständen, wie vorgegebenen Beschickungsrhythmen oder vorgegebenen Evakuierungs- und Druckregelungsmitteln, ausgenützt werden können, wobei betreffs Lackhaftung den unterschiedlichen Betriebsbereichen BT, BP in der mit dem Pfeil S angezeigten Tendenz Vorzug gegeben wird.

Im weiteren ist ersichtlich, dass das erfindungsgemässe Verfahren bei Drucken des Reaktivgases p ≦ 100mTorr, entsprechend 133 · 10⁻³mbar, arbeitet, vorzugsweise bei Drücken p ≦ 50mTorr, entsprechend 67 · 10⁻³mbar, was sich auf die Behandlungshomogenität äusserst günstig auswirkt und mit die Basis dazu schafft, grosse (> 1m) Oberflächen zu behandeln.

Die Relativlage der Elektroden und Gasausdüsungen zu den zu behandelnden Oberflächen ist äusserst unkritisch, womit auch die Basis dazu gegeben ist, praktisch beliebig geformte Oberflächen ohne Anpassung der Elektroden und Gaseindüsungen zu behandeln.

Dies möge die nachfolgende Tabelle belegen, die bei den angegebenen Versuchen gemäss den Fig. 2 bzw. 3 das Verhältnis $F_{A1}/F_{A2}$ angibt, wobei gilt:

$F_{A1}$: Abzugkraft an Stossstangenpartien mit ca. 20cm Abstand zu Stabelektroden (Minimalabstand),

$F_{A2}$: Abzugkraft an Stossstangenpartien mit ca. 80cm Abstand zu Stabelektroden (Minimalabstand).

| Druck $10^{-3}$mbar | Zeit | $F_{A1}/F_{A2}$ |
|---|---|---|
| 13,3 | 30sec | 1.0 |
| 13,3 | 90sec | 0.8 |
| 26,6 | 90sec | 0.5 |
| 6,7 | 20sec | 1.4 |
| 6,7 | 90sec | 1.3 |

Dabei wird ausdrücklich darauf hingewiesen, dass sich das Verhältnis $F_{A1}/F_{A2}$ durchaus in Funktion von Druck und Behandlungszeit zugunsten der weiter entfernten Oberflächenbereiche wenden kann.

## Patentansprüche

1. Verfahren zur Plasmabehandlung einer Werkstückoberfläche in einer Reaktivgasatmosphäre, wobei die Oberfläche mindestens im wesentlichen aus mindestens einem synthetischen, organischen Polymer besteht, zur Erhöhung mindestens der Lackhaftung, dadurch gekennzeichnet, dass der Gasdruck mindestens in der Nähe eines Haftungsmaximums in einem Lackhaftungs/Gasdruck-Diagramm gewählt wird.

2. Verfahren nach Anspruch 1, dadurch gekennzeichnet, dass die Behandlungsdauer mindestens in der Nähe eines Haftungsmaximums in einem Lackhaftungs-/Behandlungsdauer-Diagramm gewählt wird.

3. Verfahren nach Anspruch 1 oder 2, dadurch gekennzeichnet, dass die Behandlungsdauer T, insbesondere für eine Oberfläche aus auf Polypropylen-basierendem Kunststoff, gewählt wird zu:
$155 \leq T \leq 180$s, vorzugsweise dabei zu
$20$s $\leq T \leq 120$s, dabei insbesondere bevorzugterweise
$20$s $\leq T \leq 90$s.

4. Verfahren nach einem der Ansprüche 1 bis 3, dadurch gekennzeichnet, dass die Behandlungszeitdauer T, bezogen auf eine Zeitdauer $T_0$, bei der im Lackhaftungs-/Behandlungsdauer-Diagramm ein Maximum vorliegt, wie folgt gewählt wird:
$1/3\ T_0 \leq T \leq 3\ T_0$, vorzugsweise dabei
$1/2\ T_0 \leq T \leq 2\ T_0$, dabei insbesondere vorzugsweise
$2/3\ T_0 \leq T \leq 3/2\ T_0$.

5. Verfahren nach einem der Ansprüche 1 bis 4, vorzugsweise nach Anspruch 3, dadurch gekennzeichnet, dass der Reaktivgasdruck p, insbesondere für eine Oberfläche aus auf Polypropylen basierendem Kunststoff, wie folgt gewählt wird:
$3,3 \cdot 10^{-3}$mbar $\leq p \leq 40 \cdot 10^{-3}$mbar, dabei vorzugsweise
$6,6 \cdot 10^{-3}$mbar $\leq p \leq 35 \cdot 10^{-3}$mbar, dabei insbesondere vorzugsweise
$9 \cdot 10^{-3}$mbar $\leq p \leq 20 \cdot 10^{-3}$mbar.

6. Verfahren nach einem der Ansprüche 1 bis 5, dadurch gekennzeichnet, dass der Reaktivgasdruck p, bezogen auf einen Reaktivgasdruck $p_0$, bei dem im Lackhaftungs-/Gasdruck-Diagramm ein Maximum vorliegt wie folgt gewählt wird:
$1/4\ p_0 \leq p \leq 3\ p_0$, vorzugsweise dabei
$1/2\ p_0 \leq p \leq 2.5\ p_0$, dabei insbesondere vorzugsweise
$7/10\ p_0 \leq p \leq 1.5\ p_0$.

7. Verfahren nach einen der Ansprüche 1 bis 6, dadurch gekennzeichnet, dass das Plasma elektrisch mit einem Signal angeregt wird mit mindestens einem wesentlichen Leistungsanteil zwischen DC und 1MHz, vorzugsweise zwischen DC und 100kHz, vorzugsweise zwischen DC und 10kHz, dabei insbesondere bevorzugterweise zwischen 50 und 200Hz.

8. Verfahren nach Anspruch 7, dadurch gekennzeichnet, dass das Plasma mit ein- oder zweiweg-gleichgerichtetem, netzfrequentem, elektrischem Signal angeregt wird.

9. Verfahren nach einem der Ansprüche 1 bis 8, dadurch gekennzeichnet, dass das Reaktivgas ein $N_2$, $O_2$-Gasgemisch ist, vorzugsweise im Verhältnis $N_2/O_2$ von ca. 7:3.

10. Verfahren nach einem der Ansprüche 1 bis 9, dadurch gekennzeichnet, dass als Reaktivgas Luft gewählt wird.

11. Verfahren nach einem der Ansprüche 1 bis 10, dadurch gekennzeichnet, dass der Effektivwert der plasmaerzeugenden Spannung zwischen 1 und 6kV (inclusive), vorzugsweise zwischen 2 und 5kV (inclusive) gewählt wird.

12. Verfahren nach einem der Ansprüche 1 bis 11, dadurch gekennzeichnet, dass die Werkstückoberfläche zwischen mindestens einem Reaktivgaseinlass und einer Pumpe angeordnet wird.

13. Vakuumbehandlungsanlage, zur Ausführung des Verfahrens nach einem der Ansprüche 1 bis 12, mit einem Vakuumrezipienten, einer Elektrodenanordnung zur Plasmaerzeugung, einer Generatoranordnung für die elektrische Speisung der Elektrodenanordnung und einer Gaseinlassanordnung, dadurch gekennzeichnet, dass die Elektrodenanordnung mindestens zwei im Bereiche der Rezipientenwandung angeordnete Stabelektroden umfasst und die Gaseinlassanordnung mindestens eine zwischen Rezipientenwandung und mindestens eine Stabelektroden gaseindüsende, stabförmige Gasbrause.

14. Anlage nach Anspruch 13, dadurch gekennzeichnet, dass, den Stabelektroden bezüglich Rezipientenwandung im wesentlichen gegenüberliegend, eine Vakuumpumpe angeordnet ist.

15. Anlage nach einem der Ansprüche 13 oder 14, dadurch gekennzeichnet, dass die Gasbrause mit einem Luftvorrat verbunden ist, vorzugsweise mit Umgebungsluft.

16. Anlage nach einem der Ansprüche 13 bis 15, dadurch gekennzeichnet, dass die Stabelektroden mit mindestens einem Generator verbunden sind, welcher ein Signal entsprechend einem gleichgerichteten, netzfrequenten Signal abgibt.

17. Anlage nach einem der Ansprüche 13 bis 16, dadurch gekennzeichnet, dass mehr als zwei, vorzugsweise drei bis fünf Stabelektroden vorgesehen sind.

18. Anlage nach einem der Ansprüche 13 bis 17, dadurch gekennzeichnet, dass eine Gasdruckregeleinrichtung vorgesehen ist.

19. Anlage nach einem der Ansprüche 13 bis 18, dadurch gekennzeichnet, dass der Entladungsraum eine Ausdehnung von mindestens 1m aufweist.

20. Anlage nach einem der Ansprüche 13 bis 19, dadurch gekennzeichnet, dass ein stationärer Werkstückträger vorgesehen ist und vorzugsweise Stabelektroden, im wesentlichen gleich weit von einem Bereich für Werkstücke am Träger entfernt.

21. Verwendung des Verfahrens nach einem der Ansprüche 1 bis 12 und/oder der Anlage nach einem der Ansprüche 13 bis 20 für die Behandlung von Polyolefinoberflächen, insbesondere von Oberflächen aus auf Polypropylen oder Polyethylen basierenden Kunststoffmischungen.

22. Verwendung nach Anspruch 21 für Oberflächen an Werkstücken, deren Maximalausdehnung $\geq$ 1m ist, insbesondere für Kunststoffautoteile, wie Karosserieteile.

23. Lackierter, vorgängig plasmabehandelter Kunststoffteil, woran die Mindestausdehnung einer lakkierten Fläche $\geq$ 1m ist, dadurch gekennzeichnet, dass die Lackabzugkraft $\geq$ 1,8N pro 1mm Lackstreifenbreite ist, vorzugsweise $\geq$ 2,0N/mm.

## Claims

1. Process for plasma treatment of a workpiece surface in a reactive gas atmosphere, where the surface at least essentially consists of at least one synthetic organic polymer at least to increase the paint adhesion, characterized in that the gas pressure is selected at least in the vicinity of an adhesion maximum in a paint adhesion/gas pressure diagram.

2. Process according to claim 1, characterized in that the treatment duration is selected at least in the vicinity of an adhesion maximum in a paint adhesion/treatment duration diagram.

3. Process according to claim 1 or 2, characterized in that the treatment duration T, in particular for a surface made of a polypropylene-based plastic, is selected such that:
   $15s \leq T \leq 180s$, and preferably such that
   $20s \leq T \leq 120s$ and particularly preferably such that
   $20s \leq T \leq 90s$.

4. Process according to any of claims 1 to 3, characterized in that the treatment duration T, in relation to a duration $T_0$ at which a maximum exists in the paint adhesion/treatment duration diagram, is selected as follows:
   $1/3\ T_0 \leq T \leq 3\ T_0$, and preferably
   $1/2\ T_0 \leq T \leq 2\ T_0$, and particularly preferably
   $2/3\ T_0 \leq T \leq 3/2\ T_0$.

5. Process according to any of claims 1 to 4, preferably according to claim 3, characterized in that the reactive gas pressure p, in particular for a surface made of a polypropylene-based plastic, is selected as follows:
   $3.3 \cdot 10^{-3}\ mbar \leq p \leq 40 \cdot 10^{-3}\ mbar$, and preferably
   $6.6 \cdot 10^{-3}\ mbar \leq p \leq 35 \cdot 10^{-3}\ mbar$, and particularly preferably
   $9 \cdot 10^{-3}\ mbar \leq p \leq 20 \cdot 10^{-3}\ mbar$.

6. Process according to any of claims 1 to 5, characterized in that the reactive gas pressure p, in relation to a reactive gas pressure $p_0$ at which a maximum exists in the paint adhesion/gas pressure diagram, is selected as follows:

$1/4\ p_0 \leqq p \leqq 3\ p_0$, and preferably
$1/2\ p_0 \leqq p \leqq 2.5\ p_0$, and particularly preferably
$7/10\ p_0 \leqq p \leqq 1.5\ p_0$.

7. Process according to any of claims 1 to 6, characterized in that the plasma is electrically excited with a signal with at least an essential proportion between DC and 1 MHz, preferably between DC and 100 kHz, preferably between DC and 10 kHz, and particularly preferably between 50 and 200 Hz.

8. Process according to claim 7, characterized in that the plasma is excited with a one- or two-way rectified, mains frequency electrical signal.

9. Process according to any of claims 1 to 8, characterized in that the reactive gas is an $N_2$, $O_2$ gas mixture, preferably in the ratio $N_2/O_2$ of approx. 7:3.

10. Process according to any of claims 1 to 9, characterized in that air is selected as the reactive gas.

11. Process according to any of claims 1 to 10, characterized in that the effective value of the plasma-generating voltage is selected between 1 and 6 kV (inclusive), preferably between 2 and 5 kV (inclusive).

12. Process according to any of claims 1 to 11, characterized in that the workpiece surface is arranged between at least one reactive gas inlet and a pump.

13. Vacuum treatment device for the performance of the process according to any of claims 1 to 12, with a vacuum container, an electrode arrangement to generate plasma, a generator arrangement for the electrical supply to the electrode arrangement and a gas inlet arrangement, characterized in that the electrode arrangement comprises at least two rod electrodes arranged in the area of the container wall and the gas inlet arrangement comprises at least one rod-like gas nozzle introducing the gas between one container wall and at least one rod electrode.

14. Device according to claim 13, characterized in that a vacuum pump is arranged essentially opposite the rod electrode in relation to the container wall.

15. Device according to any of claims 13 or 14, characterized in that the gas nozzle is connected to an air store, preferably ambient air.

16. Device according to any of claims 13 to 15, characterized in that the rod electrodes are connected to at least one generator which emits a signal corresponding to a rectified mains-frequency signal.

17. Device according to any of claims 13 to 16, characterized in that more than two, preferably three to five rod electrodes are provided.

18. Device according to any of claims 13 to 17, characterized in that a gas pressure control device is provided.

19. Device according to any of claims 13 to 18, characterized in that the discharge chamber has an extension of at least 1 m.

20. Device according to any of claims 13 to 19, characterized in that a stationary workpiece holder is provided and preferably rod electrodes essentially equidistant from an area for workpieces on the holder.

21. Use of the process according to any of claims 1 to 12 and/or the device according to any of claims 13 to 20 for the treatment of polyolefin surfaces, in particular surfaces made of polypropylene- or polyethylene-based plastic mixtures.

22. Use according to claim 21 for surfaces on workpieces with a maximum extension of $\geqq 1$ m, in particular for plastic car parts such as body parts.

23. Painted, previously plasma-treated plastic part with a minimum extension of a painted surface of $\geqq 1$ m, characterized in that the paint removal force is $\geqq 1.8$ N per 1 mm paint strip width, preferably $\geqq 2.0$ N/mm.

**Revendications**

1. Procédé pour le traitement par plasma d'une surface de pièce dans une atmosphère de gaz réactif, la surface se composant au moins essentiellement d'au moins un polymère organique synthétique, pour augmenter au moins l'adhérence de laque, caractérisé en ce que l'on choisit la pression gazeuse pour qu'elle corresponde au moins approximativement à un maximum d'adhérence d'un diagramme adhérence de laque/pression gazeuse.

2. Procédé selon la revendication 1, caractérisé en ce que l'on choisit la durée de traitement pour qu'elle corresponde au moins approximativement à un maximum d'adhérence d'un diagramme adhérence de laque/durée de traitement.

3. Procédé selon la revendication 1 ou 2, caractérisé en ce que l'on choisit la durée de traitement T, en particulier pour une surface en matière plastique à base de polypropylène, de la façon suivante :
$15\ s \leqq T \leqq 180\ s$, de préférence

8

$20 \, \text{s} \leq T \leq 120 \, \text{s}$, et plus préférentiellement $20 \, \text{s} \leq T \leq 90 \, \text{s}$.

4. Procédé selon l'une des revendications 1 à 3, caractérisé en ce que l'on choisit la durée de traitement $T$, par rapport à une durée $T_0$ à laquelle correspond un maximum sur le diagramme adhérence de laque/durée de traitement, de la manière suivante :
$1/3 \, T_0 \leq T \leq 3 \, T_0$, de préférence,
$1/2 \, T_0 \leq T \leq 2 \, T_0$, et plus préférentiellement
$2/3 \, T_0 \leq T \leq 3/2 \, T_0$.

5. Procédé selon l'une des revendications 1 à 4, de préférence selon la revendication 3, caractérisé en ce que l'on choisit la pression de gaz réactif $p$, en particulier pour une surface en matière plastique à base de polypropylène, de la façon suivante :
$3,3 \cdot 10^{-3} \, \text{mbar} \leq p \leq 40 \cdot 10^{-3} \, \text{mbar}$, de préférence,
$6,6 \cdot 10^{-3} \, \text{mbar} \leq p \leq 35 \cdot 10^{-3} \, \text{mbar}$, et plus préférentiellement
$9 \cdot 10^{-3} \, \text{mbar} \leq p \leq 20 \cdot 10^{-3} \, \text{mbar}$.

6. Procédé selon l'une des revendications 1 à 5, caractérisé en ce que l'on choisit la pression de gaz réactif $p$, par rapport à une pression de gaz réactif $p_0$ à laquelle correspond un maximum sur le diagramme adhérence de laque/pression gazeuse, de la façon suivante :
$1/4 \, p_0 \leq p \leq 3 \, p_0$, de préférence,
$1/2 \, p_0 \leq p \leq 2,5 \, p_0$, et plus préférentiellement
$7/10 \, p_0 \leq p \leq 1,5 \, p_0$.

7. Procédé selon l'une des revendications 1 à 6, caractérisé en ce que le plasma est soumis à une excitation électrique à l'aide d'un signal, avec au moins une part de puissance essentielle située entre le courant continu et 1 MHz, de préférence entre le courant continu et 100 kHz, de préférence entre le courant continu et 10 kHz, et plus préférentiellement entre 50 et 200 Hz.

8. Procédé selon la revendication 7, caractérisé en ce que le plasma est excité à l'aide d'un signal électrique de la fréquence du secteur, redressé demi-onde ou pleine-onde.

9. Procédé selon l'une des revendications 1 à 8, caractérisé en ce que le gaz réactif est un mélange gazeux $N_2,O_2$, de préférence suivant un rapport $N_2/O_2$ d'environ 7:3.

10. Procédé selon l'une des revendications 1 à 9, caractérisé en ce que l'on choisit comme gaz réactif l'air.

11. Procédé selon l'une des revendications 1 à 10, caractérisé en ce que l'on choisit la valeur effective de la tension génératrice de plasma entre 1 et 6 kV (inclus), de préférence entre 2 et 5 kV (inclus).

12. Procédé selon l'une des revendications 1 à 11, caractérisé en ce que la surface de la pièce est disposée entre au moins une admission de gaz réactif et une pompe.

13. Installation de traitement sous vide pour la mise en oeuvre du procédé selon l'une des revendications 1 à 12, comportant un récipient à vide, un dispositif d'électrodes pour générer le plasma, un dispositif générateur pour l'alimentation électrique du dispositif d'électrodes, et un dispositif d'admission de gaz, caractérisée en ce que le dispositif d'électrodes comprend au moins deux électrodes en baguettes disposées dans la zone de la paroi du récipient, et le dispositif d'admission de gaz comprend au moins un gicleur de gaz en forme de barre qui injecte du gaz entre la paroi du récipient et l'une au moins des électrodes en baguettes.

14. Installation selon la revendication 13, caractérisée en ce qu'une pompe à vide est disposée globalement en face des électrodes en baguettes par rapport à la paroi du récipient.

15. Installation selon l'une des revendications 13 ou 14, caractérisée en ce que le gicleur de gaz est relié à une réserve d'air, de préférence à l'air ambiant.

16. Installation selon l'une des revendications 13 à 15, caractérisée en ce que les électrodes en baguettes sont reliées à au moins un générateur qui émet un signal correspondant à un signal redressé de la fréquence du secteur.

17. Installation selon l'une des revendications 13 à 16, caractérisée en ce qu'il est prévu plus de deux électrodes en baguettes, de préférence trois à cinq.

18. Installation selon l'une des revendications 13 à 17, caractérisée en ce qu'il est prévu un dispositif régulateur de pression gazeuse.

19. Installation selon l'une des revendications 13 à 18, caractérisée en ce que l'espace de décharge s'étend sur au moins 1 m.

20. Installation selon l'une des revendications 13 à 19, caractérisée en ce qu'il est prévu un porte-pièce stationnaire, des électrodes en baguettes étant disposées de préférence globalement à la même distance d'une zone prévue pour les pièces au niveau du porte-pièce.

21. Utilisation du procédé selon l'une des revendications 1 à 12, et/ou de l'installation selon l'une des revendications 13 à 20, pour le traitement de surfaces en polyoléfine, en particulier de surfaces composées de mélanges de matières plastiques à base de polypropylène ou de polyéthylène.

22. Utilisation selon la revendication 21 pour des surfaces de pièces dont l'étendue maximum est ≧ 1 m, en particulier pour des pièces automobiles en matière plastique telles que des pièces de carrosserie.

23. Pièce en matière plastique laquée et préalablement traitée par plasma, sur laquelle l'étendue minimum d'une surface laquée est ≧ 1 m caractérisée en ce que la force de pelage de laque est ≧ 1,8 N pour une largeur de bande de laque de 1 mm, de préférence ≧ 2,0 N/mm.

FIG.1

11

FIG. 2

$\dfrac{F_A}{F_{A\,max_T}}$

$F_A$/mm

$1$

$F_{A\,max_T}$

$BT_3$

$BT_2$

$S$

$BT_1$

$1N$

$p = p_0 = 10\,mTorr$

$T_0$

0.5    1.5    2    2.5    3    3.5    4    4.5    5    $T/T_0$

30    60    90    120    150    180    210    240    270    300    [sec]    T

FIG. 3

$\dfrac{F_A}{F_{A\,max_p}}$

$F_A$/mm

$1$

$F_{A\,max_p}$

$T = T \cong 60\,s$

$BP_3$

$BP_2$

$S$

$BP_1$

$1N$

0.5    $P_0$    1.5    2    2.5    3    $p/p_0$    p

5    10    15    20    25    30    mTorr

6.7    13.3    20    27    34    40    $10^{-3}$mbar

FIG. 4